# EUROPEAN PATENT APPLICATION

(11) **EP 1 671 879 A2**
(43) Date of publication of application: **21.06.2006**
(21) Application number: 05445071.3
(22) Date of filing: 28.09.2005
(51) Int. Cl.: B62K 25/08

(54) **Device pertaining to a telescopic leg for a motor cycle**

(30) Priority: 17.12.2004 SE 0403066
(71) Applicant: ÖHLINS RACING AB, 194 27 Upplands Väsby (SE)
(72) Inventor: Öhlin, Kenth, 194 27 Upplands Väsby (SE)
(74) Representative: Karlsson, Berne

(57) **Abstract**

A telescopic leg forming part of a front fork comprises displaceably arranged outer and inner parts (3, 4). Within the leg parts there is disposed a first chamber (10) for liquid and gas medium (12), together with a control and sealing arrangement between the leg parts, in which a second chamber (21) between a first end of a control element and a sealing element (19) is intended to accommodate some of the liquid medium (12a). The second chamber is provided with or connected to a medium supply arrangement which, irrespective of the mutual positions and movements of the outer and inner leg parts, ensures a supply of medium from a third chamber (22), disposed between the leg parts and at the second end of the control element, to the second chamber. The supply of medium substantially counteracts pressure reduction in the second chamber and ensures maintenance of the said lubrication function. With the invention, pump-up effects in the telescopic leg due to infiltrating air via an outer sealing element are avoided. Vibrations and jolts transmitted to the handlebars during riding of the motor cycle can also be substantially reduced.

## Description

The present invention relates to a device pertaining to a telescopic leg forming part of a front fork of a motor cycle. The telescopic leg comprises outer and inner leg parts arranged such that they are mutually displaceable. Additionally included is a first chamber, disposed within the leg parts, for liquid and gas medium. The liquid medium is normally constituted by hydraulic oil and the gas medium by air. Further included is a control and sealing arrangement between the leg parts, in which a second chamber between a first end of a control element and a sealing element is intended to accommodate some of the liquid medium which helps the lubrication between the outer wall of the inner leg and an inner face of the control element.

Telescopic front forks for motor cycles are previously well known in the field and the present invention represents a refinement of the applicant's own marketed front fork with designation Öhlin FGYA 486. One end of the fork is in this case connected to the front wheel of the motor cycle and the other end to the chassis of the motor cycle. The fork comprises a piston arrangement, which, on its top side, works against liquid and gas medium disposed in the said chamber, in which a spring arrangement, too, is disposed. The leg parts are raised by means of sleeve-shaped control elements, which can vary in number and can number, for example, two. The sealing elements shall ensure that medium does not leak out from the inner chamber of the fork.

The known control and sealing arrangements give rise to pump-up tendencies involving ambient air in the telescopic fork. These pump-up tendencies mean that it becomes necessary to bleed the telescopic front fork on all occasions which are affected by the motor cycle application. The pump-up effect brings about a change to the control and spring characteristics of the motor cycle. The bleeding requirement poses problems, since the bleeding must be done with a stationary motor cycle, which creates significant drawbacks, for example within the context of a competition. The pump-up effect also creates drawbacks as a result of increased jolting and vibration tendencies in the handlebars. The said drawbacks with the pump-up effect are accentuated in motor cycles with two-wheel drive, in which landing after an air jump and controlling of the airborne position of the motor cycle by throttle adjustment places high demands upon the sealing and control arrangement between the leg parts in the fork. It is also important that reliable lubricating functions can be constantly maintained. The object of the present invention is to solve, inter alia, these problems.

In connection with the production of components for telescopic front forks, it is important that conventional and established components can be utilized and that used production methods can be applied. The invention solves these problems also.

A device can principally be deemed to be characterized, inter alia, in that the second chamber is provided with or is connected to a medium supply arrangement which, irrespective of the mutual positions and movements of the outer and inner leg parts, ensures a supply of medium from a third chamber, disposed between the leg parts and at the second end of the control element, to the second chamber. A further characteristic is that the medium supply arrangement is designed to, through the supply of medium, on the one hand counteract substantial pressure reduction in the second chamber, and on the other hand ensure maintenance of the said lubrication, irrespective of the said mutual positions and movements between the leg parts.

In refinements of the inventive concept, it is proposed that the medium supply arrangement shall comprise grooves in the inner face of the outer leg and/or the outer face of the control element, which grooves extend along the longitudinal direction of the telescopic leg. The said grooves can extend straight in the longitudinal direction of the telescopic leg, in zigzag pattern or in a spiral along the longitudinal direction, etc. The grooves can have a combined area in the cross section of the telescopic leg of 10-20 mm², preferably about 15 mm². The depth of the grooves can be 20-60%, preferably 30-50%, of the wall thickness in the outer leg and the control element respectively. The groove dimensions and the medium supply arrangement are here such that the supply of medium is ensured even in case of very rapid movements, for example movements within the range 2-10 m/s, for example 8 m/s. The control element end on the particular first control element is designed to allow the passage of liquid for effective guidance around the relevant end of the control element in question, i.e. the end facing towards the wheel suspension of the telescopic leg. The medium supply arrangement is preferably designed to maintain substantially the same pressure in the second chamber, irrespective of the mutual positions and movements of the leg parts.

Further characteristics of the invention emerge from the following subclaims. As a result of the above-stated, a telescopic leg is enabled which works well on motor cycles even when these are used in a cross-country context in which they can perform air jumps and, on landings, can hit the ground with large stop forces. The pump-up tendencies in the telescopic leg are counteracted effectively with the invention, which means that the bleeding requirement can be substantially or wholly eliminated. The medium supply arrangement can be produced by means of conventional-type milling elements and the fitting of the invention in the telescopic leg does not call for any changes in the rest of the construction and functioning thereof.

A currently proposed embodiment of a device having the characteristics typical of the invention shall be described below with simultaneous reference to the appended drawings, in which:
- Figure 1: shows in longitudinal section parts of a telescopic leg intended to form part of telescopic front fork,
- Figure 1a: shows in enlarged representation relative to Figure 1 parts of the telescopic front fork,
- Figure 2: shows in horizontal view a control element forming part of the leg, and spacer elements assigned to this or these,
- Figure 3: shows in cross section parts of an outer and inner leg in a telescopic leg,
- Figure 4: shows in cross section a control element,
- Figure 5: shows in side view and in basic representation an outer and inner leg of a telescopic leg, the leg parts of which occupy a first mutual position, and
- Figure 6: shows in side view and in basic representation the leg parts according to Figure 5, occupying a second mutual displacement position in which the leg parts have a greater degree of sliding- together than in the case according to Figure 5.

Reference is made, in purely general terms, to the known telescopic leg which has been specified above.

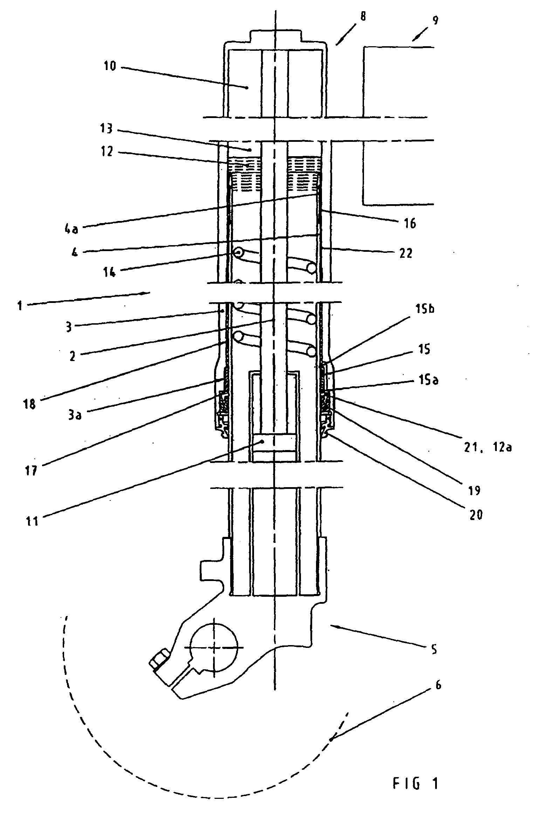

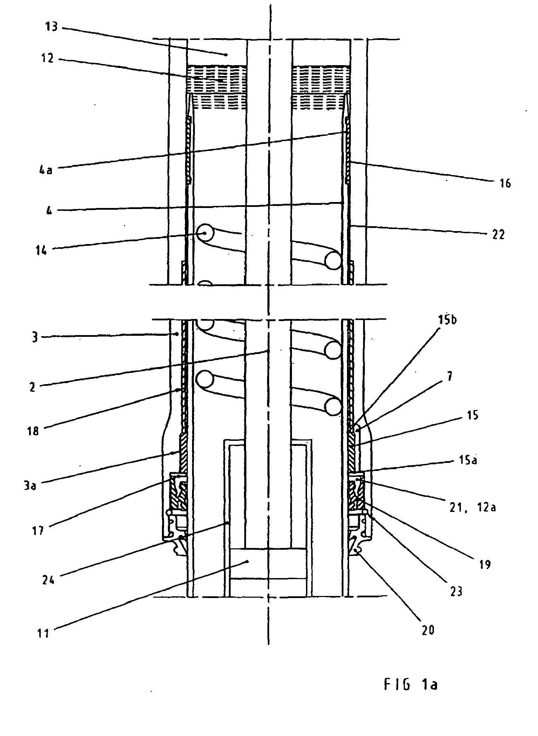

In Figures 1 and 1a, the telescopic leg is fundamentally denoted by 1. The centre axis of the telescopic leg has the notation 2. An outer leg, for example in aluminium, is denoted by 3, and an inner leg, for example in steel, by 4. The first end 5 of the telescopic leg is designed to support, in a manner which is known per se, a symbolically indicated motor cycle front wheel 6. The telescopic leg, at its second end 8, is designed for fastening in a motor cycle frame, which is symbolized by 9. The telescopic leg arrangement is provided with an inner chamber 10. Connected to the outer leg is a piston 11 disposed in a cylinder 24. In a manner which is known per se, the piston and cylinder arrangement, together with a valve arrangement (here not shown), forms part of a damping system disposed in the leg. A liquid medium, for example hydraulic oil provided with additives, is illustrated by 12. On the liquid medium column 12 there is gas medium present, for example air 13. In the inner chamber 10 there is also disposed a spring 14. Since the working of the two components in the telescopic leg is previously well known, it will not be more fully described here. In the present case, two control elements 15 and 16 are utilized. The control element can be fixed in various different ways. In a first alternative, the control element is fitted in an internal recess 3a in the outer leg 3. At the first end 15a of the control element, which faces towards the wheel 6, there is disposed a sealing element 19. Outside the sealing element 19, a scraper ring 20 is fitted. A spacer element 18 interacts with the first control element via its second end 15b, or the end which is facing inwards towards the frame. The second control element 16 can be fitted in an outer recess 4a in the inner leg. Between the end 15a and the sealing element 19 there is a second chamber 21 present. Between the first and second control element there is a third chamber 22 present. The said chambers 21 and 22 are annular. The first and second control elements, which have the function of raising the inner leg relative to the outer leg, are assigned a dimension in the radial direction which approximates to the radial annular chambers, so that an appropriate control is obtained. A minor clearance is nevertheless present and the control elements can also have surface structures which allow liquid medium to pass from the first chamber 10 to the third chamber 22 and onward to the second chamber 21. The requirements of good controllability and enablement of the passage of oil between the chambers 10, 22 and 21 are to a certain extent contradictory. If the diameters of the control elements are too large, the oil passages can be obstructed, which inhibits the aspired lubricating effect between the mutually movable parts, i.e. between the outer leg 3 and the control element 16, and the inner leg 4 and the control element 15 respectively. There can therefore be difficulties in obtaining a thoroughly functioning, effective lubricating function with the oil which has forced its way down into the chamber 21. Given certain positions and mutual movements between the leg parts, the oil quantity 12a in the chamber 21 can run out, which on the one hand results in poor lubricating function if the movement is continued, and on the other hand results in the formation of an underpressure in the chamber 21. Such an underpressure can result in ambient air being able to penetrate into the chamber 21 via the scraper ring 20 and the sealing element 19. Such penetrating air gives rise to the said pump-up effect. Figure 1a also shows a chamber or groove 7 extending in the longitudinal direction of the leg, disposed on the outside of the control element and intended to form part of the medium-conducting passage to the chamber 21. On the outside of the seal 21 there is disposed a locking ring 23, which holds the internal components of the leg in place.

According to the invention, the chamber 21 shall be provided with or interact with a medium supply arrangement which prevents the said medium shortage and fall in pressure, as well as penetration of external air into the chamber 21. According to the concept of the invention, longitudinal grooves on the inside of the outer leg and/or the outside of the control element are utilized in this case. The outer face of the inner leg is denoted by 4b and the inner face of the outer leg by 3b.

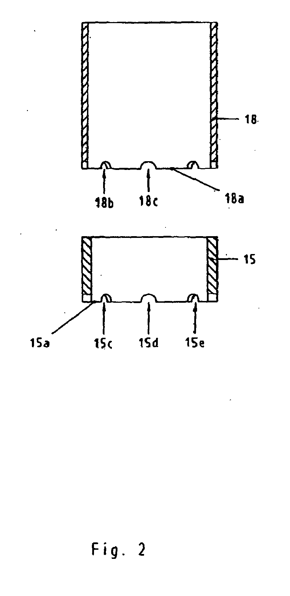

Figure 2 shows the control element 15 and the spacer ring 18 from the side. The control element is provided at its first end 15a with depressions or recesses 15c, 15d, 15e. The said end recesses are designed to allow the passage of oil or liquid at the end 15a. The spacer element 18, at its end 18a directed towards the control element, is provided with corresponding recesses 18b, 18c.

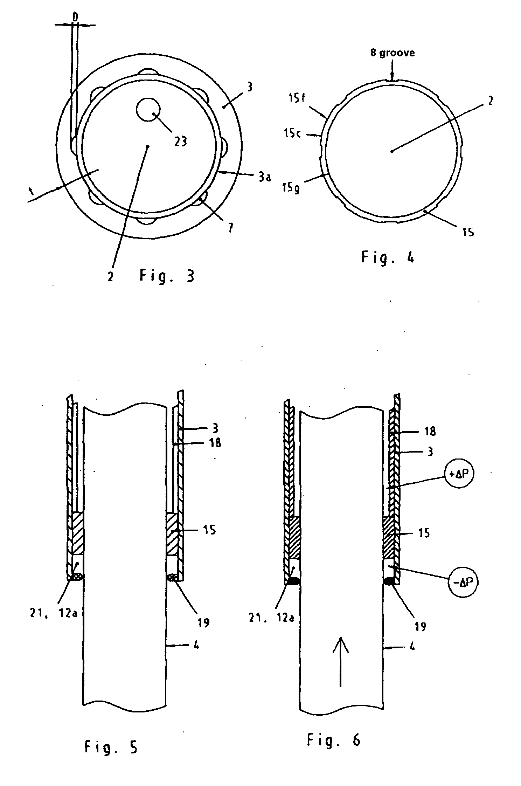

Such grooves in the outer leg 3 are shown in Figure 3. The grooves extend in the longitudinal direction of the telescopic leg, i.e. perpendicular to the figure plane parallel with the centre axis 2. The number of grooves may range from 4 to 8, for example 6. In the illustrated cross section according to Figure 6, the grooves have a total area of 10-20 mm², for example about 15 mm². The configurations of the grooves can be cup-shaped, which enables the said groove formation to be produced from the inside of the leg with a rotary milling tool 23. The grooves can extend straight in the said longitudinal direction, in a zigzag-shaped path, or along a helical path. The groove can have a depth D of 20-60% of the wall thickness t. Preferably, the groove depth is 30-50% of the said thickness t.

As a complement or an alternative, according to Figure 4, the control element 15 can be provided with groove formations of corresponding type on its outside 15f. The number of grooves, groove depth, groove configuration can correspond to that described on the embodiment according to Figure 3. In the present case, two grooves of substantially rectangular configuration have here been shown.

The extents of the grooves relative to the centre line 2 can be matched by those indicated for the embodiment according to Figure 3. The outer face of the control element 15 is denoted by 15f and the inner face by 15g.

As a result of the above, an appropriate oil or liquid flow from the chamber 22 to the chamber 21 is obtained. Regardless of whether the groove arrangement is placed in the outer leg or in the control element and/or in the spacer element, the control element can be provided, for example, with the recesses 15c, 15d and 15e at its first end in order to ensure an appropriate circulation of the oil or liquid around the control element end in question. Corresponding groove arrangements can be provided for the spacer element.

According to Figure 5, the leg parts 3 and 4 are shown in a first mutual displacement position. This displacement position can be regarded as a starting position, in which liquid medium is present in the chamber 21 (see Figure 1). A critical case arises when the leg parts 3 and 4 are slid together into a second slide-together position according to Figure 6. Even in the event of moderate movements from the speed point of view, tendencies arise for the medium 12a to be emptied from the chamber 21, which would have been a major problem according to the prior art. According to the invention, the chamber 21 is supplied with medium from the chamber 22 through the said groove arrangement, so that underpressure tendencies are eliminated and external air is prevented from penetrating into the shock absorber via the scraper ring 20 and the sealing element 19. The function of the spacer element 18 is to hold the control element 15 in the longitudinal displacement position shown in Figure 1.

The invention is not limited to the above embodiment shown by way of example, but may be modified within the scope of the following patent claims and the inventive concept.

## Claims

1. Device pertaining to a telescopic leg (front fork) belonging to a motor cycle and comprising outer and inner leg parts (3, 4) arranged such that they are mutually displaceable, a first chamber (10), disposed within the leg parts, for liquid and gas medium (12), and also a control and sealing arrangement between the leg parts, in which a second chamber (21) between a first end of a control element (15) and a sealing element (19) is intended to accommodate some of the liquid medium (12a) which helps the lubrication between the outer wall of the inner leg and an inner face of the control element, **characterized in that** the second chamber (21) is provided with or connected to a medium supply arrangement which, irrespective of the mutual positions and movements of the outer and inner leg parts, ensures a supply of medium from a third chamber (22), disposed between the leg parts and at the second end (15b) of the control element, to the second chamber (21), and **in that** the medium supply arrangement is designed to, through the supply of medium, on the one hand counteract substantial pressure reduction in the second chamber, and on the other hand ensure that the said lubrication is maintained, irrespective of the said positions and movements.

2. Device according to Patent Claim 1, **characterized in that** the medium supply arrangement comprises grooves in the inner face of the outer leg, which grooves extend along the longitudinal direction of the telescopic leg.

3. Device according to Patent Claim 1 or 2, **characterized in that** the medium supply arrangement comprises grooves in the outer face of the control element and possibly on a spacer element disposed on the control element, which grooves extend along the longitudinal direction of the telescopic leg.

4. Device according to Patent Claim 1, 2 or 3, **characterized in that** the medium supply arrangement is designed, through counteraction of the pressure reduction in the second chamber (21), to prevent pump-up effect through suction via a sealing element (19) from ambient air.

5. Device according to any one of Patent Claims 2-4, **characterized in that** the said grooves are 4-8, preferably 6, in number and are essentially evenly distributed along the inner and outer peripheries of the outer leg and the control element respectively.

6. Device according to any one of Patent Claims 2-5, **characterized in that** the grooves have a combined area of 10-20 mm², preferably about 15 mm².

7. Device according to any one of Patent Claims 2-6, **characterized in that** the respective groove or depression is substantially cup-shaped.

8. Device according to any one of Patent Claims 2-7, **characterized in that** the respective groove has a depth of 20-60% of the wall thickness (t) in the outer leg and the control element respectively.

9. Device according to any one of Patent Claims 2-8, **characterized in that** the grooves extend straight, in zigzag shape or helically in the longitudinal direction of the telescopic leg.

10. Device according to any one of Patent Claims 2-9, **characterized in that** the grooves ensure medium and pressure fall prevention upon movements from a first displacement position between the leg parts to the second displacement position between the leg parts, in which the leg parts are more compressed in the second displacement position than in the first displacement position.

11. Device according to Patent Claim 10, **characterized in that** the grooves ensure the medium and pressure supply even in the event of rapid movements, for example movements of 2-10 m/s, or about 8 m/s, from the first to the second displacement position.

12. Device according to any one of Patent Claims 2-11, **characterized in that** the control element end is designed to allow the passage of liquid for effective guidance around the relevant end of the control element, for example the first end (15a).

13. Device according to any one of Patent Claims 2-12, **characterized in that** the medium supply arrangement is designed to maintain substantially the same pressure in the second chamber (21), irrespective of the mutual positions and movements of the leg parts.
